# EUROPEAN PATENT APPLICATION

(11) **EP 4 668 445 A1**
(43) Date of publication of application: **24.12.2025**
(21) Application number: 24756967.6
(22) Date of filing: 15.02.2024
(51) Int. Cl.: H01M 50/289, H01M 10/658, H01M 50/202, H01M 50/291, H01M 50/293

(54) **PARTITION MEMBER AND BATTERY ASSEMBLY**

(30) Priority: 15.02.2023 JP 2023021298
(71) Applicant: Mitsubishi Chemical Corporation, Tokyo 100-8251 (JP)
(72) Inventor: HASHIMOTO, Kei, Tokyo 100-8251 (JP); KAWAI, Tomohiro, Tokyo 100-8251 (JP)
(74) Representative: Vossius & Partner Patentanwälte Rechtsanwälte mbB
(86) International application number: PCT/JP2024/005325
(87) International publication number: WO 2024/172127

(57) **Abstract**

What is provided is a partition member that partitions battery cells, the partition member having excellent shape stability even at a high temperature, and a battery assembly that uses the partition member. A layer for controlling heat transfer is retained in a retaining part having compressibility to form an inner enclosure body, and the inner enclosure body is encapsulated in an outer casing body to form a partition member. The retaining part is preferably formed in a tray shape, is provided to have a thickness larger than that of the layer for controlling heat transfer, and is configured such that an area of the outer casing body coming into contact with the inner enclosure body increases with an increase in an external pressure applied to the partition member.

## Description

### TECHNICAL FIELD

The present invention relates to a partition member that is stored in a battery assembly and that partitions battery cells, and to a battery assembly.

Priority is claimed on Japanese Patent Application No. 2023-21298, filed February 15, 2023, the content of which is incorporated herein by reference.

### BACKGROUND ART

In recent years, regarding secondary batteries that are rapidly increasingly used as power sources of vehicles and the like, studies have been made on improving the energy density of secondary batteries for the purpose of increasing the degree of freedom when installed in a limited space of a vehicle or the like, and for the purpose of extending the cruising distance that can be traveled on a single charge, and the like. On the other hand, the safety of a secondary battery tends to be inversely related to the energy density, and the safety tends to decrease as the secondary battery has a higher energy density. For example, in a secondary battery to be installed in an electric vehicle having a cruising distance of several hundred kilometers (km), when the secondary battery is damaged due to overcharging, an internal short-circuit, or the like, the battery surface temperature exceeds several hundred degrees Celsius (°C) and may even reach 1,000°C or higher.

Since secondary batteries used as power sources for vehicles and the like are generally used as battery assemblies composed of a plurality of battery cells, when one of the battery cells constituting a battery assembly is damaged and reaches a temperature range such as described above, there is a concern that adjacent battery cells are also damaged due to the heat generation, and the damage may spread to the entire battery assembly in a chain reaction. In order to prevent such a chain of damage to battery cells, various technologies have been proposed in which partition members are provided between the battery cells.

For example, there is a partition member having a configuration in which a heat transfer control layer and a compressibility control layer are encapsulated in an outer casing body (see, for example, Patent Document 1).

### Citation List

### Patent Document

Patent Document 1: Japanese Unexamined Patent Application, First Publication No. 2022-119679

### SUMMARY OF INVENTION

### Technical Problem

The partition member of the related art has a characteristic that a shape of a paste material constituting the heat transfer control layer is not stable at a high temperature. Furthermore, the partition member has a characteristic that the time taken for the temperature of the water contained in the heat transfer control layer to completely volatilize after reaching the boiling point (hereinafter, also referred to as "plateau time", and a region of this time is also referred to as "plateau region") is short.

An object of the present invention is to provide a partition member having excellent shape stability even at a high temperature, and a battery assembly that uses the partition member.

### Solution to Problem

The inventors of the present invention conducted intensive studies to solve the above-described problems, and as a result, they found that the above-described problems can be solved by providing a composition part containing at least one of inorganic particles and inorganic fibers and a binder in an inner enclosure body of a partition member to be disposed between battery cells, thus completing the present invention.

That is, the present invention includes the following aspects.
[1] A partition member that has a thickness direction and a plane direction orthogonal to the thickness direction and that partitions battery cells in the thickness direction, the partition member comprising:
   an outer casing body; and
   an inner enclosure body covered with the outer casing body,
   wherein the inner enclosure body includes a composition part composed of a composition containing at least one of inorganic particles and inorganic fibers, and a binder.
[2] The partition member according to [1],
   wherein the composition part further contains a liquid.
[3] The partition member according to [1] or [2],
   wherein the inner enclosure body further includes a retaining part, and
   the retaining part includes an outer wall part that is in contact with at least a portion of an outer peripheral end surface in the plane direction of the composition part and extends in the thickness direction.
[4] The partition member according to [3],
   wherein both ends of the retaining part in the thickness direction of the outer wall part are in contact with the outer casing body.
[5] The partition member according to any one of [1] to [4],
   wherein a deformation ratio in the thickness direction of the partition member when the partition member is pressurized at 0.2 MPa in the thickness direction is 6.0% or more.
[6] The partition member according to any one of [3] to [5],
   wherein a length in the thickness direction of the retaining part is larger than a length in the thickness direction of the composition part.
[7] The partition member according to any one of [3] to [6],
   wherein the retaining part has a space having a depth in the thickness direction, and the composition part is retained within the space.
[8] The partition member according to any one of [3] to [6],
   wherein the retaining part has a space having a depth in the thickness direction, the space includes a plurality of first spaces partitioned in a lattice shape, and the composition part is retained in each of the first spaces.
[9] The partition member according to any one of [3] to [6],
   wherein the retaining part has a space having a depth in the thickness direction, the space includes a plurality of first spaces partitioned in a lattice shape, the composition part is retained in each of the first spaces, and a third space is formed between neighboring first spaces on a back side of the retaining part.
[10] The partition member according to [9],
   wherein a ratio of a volume of the third space with respect to a volume of 100% by volume of a smallest rectangular parallelepiped configured to store the retaining part is 0.1% to 15% by volume.
[11] The partition member according to any one of [3] to [10],
   wherein the retaining part is a tray-shaped member including a frame-shaped outer wall part surrounding the composition part, and a bottom part closing one opening of the frame-shaped outer wall part, and
   the composition part is retained in a recessed part on an inner side of the outer wall part.
[12] The partition member according to [11],
   wherein the tray-shaped member further includes a lattice-shaped partition wall that partitions the inner side of the frame-shaped outer wall part,
   a plurality of recessed parts are formed on the inner side of the frame-shaped outer wall part by the partition wall, and
   the composition part is retained in each of the recessed parts.
[13] The partition member according to [11],
   wherein the tray-shaped member further includes a lattice-shaped partition wall that partitions the inner side of the frame-shaped outer wall part,
   a plurality of recessed parts are formed on the inner side of the frame-shaped outer wall part by the partition wall,
   the partition wall comprises two side walls rising from the bottom part between two recessed parts, and a connecting part that connects top parts of the side walls, a recessed line opening toward a bottom part side is formed between the two side walls,
   the composition part is retained in each of the recessed parts, and the composition parts are connected to each other above a low position part.
[14] The partition member according to any one of [11] to [13],
   wherein when the tray-shaped member is viewed in plan view in the thickness direction, a ratio of an area of the composition part with respect to a total area of the tray-shaped member and the composition part is 50% to 100% by volume.
[15] The partition member according to any one of [11] to [14],
   wherein when a shape of the tray-shaped member as viewed in plan view from the thickness direction is a rectangular shape, and
   XYZ coordinate axes are defined such that the thickness direction is defined as a Z-axis direction, a direction parallel to one side of an outer circumferential edge of the tray-shaped member in the plane direction is defined as an X-axis direction, and a direction orthogonal to the X-axis direction in the plane direction is defined as a Y-axis direction,
   in a cross-section obtained by cutting the tray-shaped member in an XZ plane to pass through the composition part, a ratio of an area occupied by a space with respect to an area of a smallest rectangle surrounding the tray-shaped member is 15% by volume or less, and
   in a cross-section obtained by cutting the tray-shaped member in a YZ plane to pass through the composition part, the ratio of the area occupied by the space with respect to the area of the smallest rectangle surrounding the tray-shaped member is 15% by volume or less.
[16] A battery assembly including:
   a plurality of battery cells; and
   the partition member according to any one of [1] to [15] disposed between the battery cells.
[17] The battery assembly according to [16],
   wherein a unit structure comprising two of the battery cells and the partition member disposed between the two battery cells satisfies the following condition (i):
   (i) a thermal conductivity of the partition member when a surface average temperature of the partition member in contact with the two battery cells is 200°C is reduced to 70% or less with respect to a thermal conductivity of the partition member when the surface average temperature is 25°C.
[18] The battery assembly according to [16] or [17],
   wherein a unit structure comprising two of the battery cells and the partition member disposed between the two battery cells satisfies the following condition (ii):
   (ii) a deformation ratio of the partition member disposed between the battery cells against a pressure of 0.2 MPa applied between the two of the battery cells is 6.0% or more.

[A1] A partition member that has a thickness direction and a plane direction orthogonal to the thickness direction and that partitions battery cells in the thickness direction, the partition member comprising:
an outer casing body; and
an inner enclosure body covered with the outer casing body.

[A2] The partition member according to [A1],
wherein when a surface average temperature of the partition member is 25°C, a thermal conductivity in a thickness direction of the partition member is 0.20 [W/(m·K)] or more.

[A3] The partition member according to [A1] or [A2],
wherein when the partition member is pressurized at 1.0 MPa for one minute in the thickness direction, the inner enclosure body remains housed in the outer casing body.

[A4] The partition member according to any one of [A1] to [A3],
wherein when temperature is raised to 100°C at a rate of 1.7°C/min, the inner enclosure body remains housed in the outer casing body.

[B1] The partition member according to any one of [A1] to [A4],
wherein the inner enclosure body includes a composition part containing a thermal resistance changing material.

[B2] The partition member according to any one of [B1],
wherein in the thermal resistance changing material, a thermal resistance after heating increases with respect to a thermal resistance before heating.

[B3] The partition member according to [B1] or [B2],
wherein in the thermal resistance changing material, the thermal resistance after heating increases to 1.5 or more times with respect to the thermal resistance before heating.

[B4] The partition member according to any one of [B1] to [B3],
wherein the composition part includes a composition part containing a phase change material.

[B5] The partition member according to any one of [B1] to [B4],
wherein the phase change material undergoes an irreversible phase change at a specified temperature.

[B6] The partition member according to any one of [B1] to [B5],
wherein the phase change material undergoes a reversible phase change at a specified temperature.

[B7] The partition member according to any one of [B1] to [B6],
wherein the phase change material undergoes a phase change accompanied by an endothermic reaction at a specified temperature.

[C1] The partition member according to any one of [A1] to [A4] and [B1] to [B7],
wherein the inner enclosure body includes a composition part containing at least one of inorganic particles and inorganic fibers, and a binder.

[C2] The partition member according to [C1],
wherein the binder contains a material that is cured by a hydration reaction.

[C3] The partition member according to [C1] or [C2],
wherein the composition part contains at least any one of inorganic particles and inorganic fibers, and a hydration product.

[C4] The partition member according to any one of [C1] to [C3],
wherein the composition part further contains a liquid.

[C5] The partition member according to any one of [C1] to [C4],
wherein the liquid has a boiling point of 50°C to 200°C.

[C6] The partition member according to any one of [C1] to [C5],
wherein the liquid is water.

[C7] The partition member according to any one of [C1] to [C6],
wherein the composition part further contains a liquid, and
the amount of the liquid is 1% to 90% by mass with respect to 100% by mass of the composition part.

[C8] The partition member according to any one of [C1] to [C7],
wherein the partition member contains 1% to 70% by mass of at least one of the inorganic particles and the inorganic fibers with respect to 100% by mass of the composition part.

[C9] The partition member according to any one of [C1] to [C8],
wherein the partition member contains 1% to 90% by mass of a liquid with respect to 100% by mass of the composition part.

[C10] The partition member according to any one of [C1] to [C9],
wherein the partition member contains 1% to 70% by mass of the binder with respect to 100% by mass of the composition part.

[C11] The partition member according to any one of [C1] to [C10],
wherein the partition member contains 1% to 70% by mass of a hydration product with respect to 100% by mass of the composition part.

[C12] The partition member according to any one of [C1] to [C11],
wherein the composition part does not become suspended even when stored for 24 hours under conditions of 25°C and then immersed in water for 10 minutes.

[C13] The partition member according to any one of [C1] to [C12],
wherein a viscosity at 25°C of a composition used in the composition part as measured with a Brookfield viscometer, is 10 to 200 Pa·s.

[C14] The partition member according to any one of [C1] to [C13],
wherein a viscosity at 25°C of a composition used in the composition part as measured with a Brookfield viscometer, is 15 to 100 Pa·s.

[D1] The partition member according to any one of [A1] to [A4], [B1] to [B7], and [C1] to [C14],
wherein the inner enclosure body includes a composition part and a retaining part, and
the retaining part includes an outer wall part that is in contact with at least a portion of an outer peripheral end surface in the plane direction of the composition part and extends in the thickness direction.

[D2] The partition member according to [D1],
wherein both ends in the thickness direction of the outer wall part are in contact with the outer casing body.

[D3] The partition member according to [D1] or [D2],
wherein the retaining part contains a thermoplastic resin.

[D4] The partition member according to any one of [D1] to [D3],
wherein a deformation ratio (X) in the thickness direction of the partition member when the partition member is pressurized at 0.2 MPa in the thickness direction, is 6.0% or more.

[D5] The partition member according to any one of [D1] to [D4],
wherein a deformation ratio (Y) in the thickness direction of the partition member when the partition member is pressurized at 1.0 MPa in the thickness direction, is 12% or more.

[D6] The partition member according to any one of [D1] to [D5],
wherein a difference (X - Y) between the deformation ratio (X) in the thickness direction of the partition member when an external pressure of 0.2 MPa is applied in the same direction, and the deformation ratio (Y) in the same direction when an external pressure of 1.0 MPa is applied in the same direction, is 3.0% to 60%.

[D7] The partition member according to any one of [D1] to [D6],
wherein a ratio (Y/X) of the deformation ratio (Y) in the thickness direction of the partition member when an external pressure of 1.0 MPa is applied in the same direction, to the deformation ratio (X) in the same direction when an external pressure of 0.2 MPa is applied in the same direction, is 0.10 to 2.0.

[E1] The partition member according to any one of [A1] to [A4], [B1] to [B7], [C1] to [C14], and [D1] to [D7],
wherein the inner enclosure body includes a composition part and a retaining part, and a length in the thickness direction of the retaining part is larger than a length in the thickness direction of the composition part.

[E2] The partition member according to [E1],
wherein the retaining part has a space having a depth in the thickness direction.

[E3] The partition member according to [E1] or [E2],
wherein the retaining part has a space having a depth in the thickness direction, and
the space includes a plurality of first spaces partitioned in a lattice shape.

[E4] The partition member according to any one of [E1] to [E3],
wherein the retaining part has a space having a depth in the thickness direction, and
the space includes a plurality of first spaces partitioned in a lattice shape and further includes a second space that partially connects the first spaces neighboring each other.

[E5] The partition member according to any one of [E1] to [E4],
wherein the retaining part is a tray-shaped member including a frame-shaped outer wall part surrounding the composition part, and a bottom part closing one opening of the frame-shaped outer wall part, and
the composition part is retained in a recessed part on an inner side of the outer wall part.

[E6] The partition member according to [E5],
wherein the tray-shaped member further includes a lattice-shaped partition wall that partitions an inner side of the frame-shaped outer wall part,
a plurality of recessed parts are formed on the inner side of the frame-shaped outer wall part by the partition wall, and
the composition part is retained in each of the recessed parts.

[E7] The partition member according to [E5],
wherein the tray-shaped member further includes a lattice-shaped partition wall that partitions an inner side of the frame-shaped outer wall part,
the partition wall has a low position part that is partially low,
a plurality of recessed parts are formed on the inner side of the frame-shaped outer wall part by the partition wall,
the composition part is retained in each of the recessed parts, and
the composition parts are connected to each other on the low position part.

[F1] The partition member according to any one of [A1] to [A4], [B1] to [B7], [C1] to [C14], [D1] to [D7], and [E1] to [E6],
wherein the partition member is configured such that an area of contact between the outer casing body and the inner enclosure body increases along with an increase in an external pressure applied to the partition member.

[F2] The partition member according to [F1],
wherein the inner enclosure body includes a composition part and a retaining part, and
the retaining part is partially or entirely in contact with one side in a thickness direction of the composition part.

[F3] The partition member according to [F1] or [F2],
wherein a ratio of a contact area between the outer casing body and the inner enclosure body when the external pressure is 0.2 MPa, with respect to a contact area between the outer casing body and the inner enclosure body when the external pressure is 0 MPa, is 1.0 to 200.

[F4] The partition member according to any one of [F1] to [F3],
wherein a ratio of an area of the retaining part with respect to a total area of each of the composition part and the retaining part as viewed in plan view from the thickness direction, is 0.01 to 0.50.

[S1] A battery assembly comprising:
a plurality of battery cells; and
the partition member according to any one of [A1] to [A4], [B1] to [B7], [C1] to [C14], [D1] to [D7], [E1] to [E6], or [F1] to [F4], which is disposed between the battery cells.

[S2] The battery assembly according to [S1],
wherein a unit structure composed of two of the battery cells and the partition member disposed between the two battery cells satisfies the following condition (i): (i) a thermal conductivity of the partition member when a surface average temperature of the partition member in contact with two of the battery cells is 200°C is reduced to 70% or less with respect to a thermal conductivity of the partition member when the surface average temperature is 25°C.

[S3] The battery assembly according to [S1] or [S2],
wherein a unit structure composed of two of the battery cells and the partition member disposed between the two battery cells satisfies the following condition (ii):
(ii) a deformation ratio of the partition member disposed between two of the battery cells against a pressure of 0.2 MPa applied between the battery cells is 6.0% or more.

### Advantageous Effects of Invention

According to the present invention, it is possible to configure a partition member having excellent shape stability even at a high temperature, and a battery assembly in which the partition member is incorporated.

### BRIEF DESCRIPTION OF DRAWINGS

[FIG. 1] A diagram showing a schematic longitudinal cross-section obtained by cutting an example aspect of a partition member of the present invention in a thickness direction.
[FIG. 2A] A diagram showing a schematic longitudinal cross-sectional view obtained by cutting an example configuration aspect of an inner enclosure body constituting the partition member, in the thickness direction.
[FIG. 2B] A diagram showing a schematic longitudinal cross-sectional view obtained by cutting an example configuration aspect of the inner enclosure body constituting the partition member, in the thickness direction.
[FIG. 2C] A diagram showing a schematic longitudinal cross-sectional view obtained by cutting an example configuration aspect of the inner enclosure body constituting the partition member, in the thickness direction.
[FIG. 3A] A diagram showing a schematic plan view of an example configuration aspect of the inner enclosure body constituting the partition member, as viewed in plan view from the thickness direction.
[FIG. 3B] A diagram showing a schematic plan view of an example configuration aspect of the inner enclosure body constituting the partition member, as viewed in plan view from the thickness direction.
[FIG. 4] A diagram showing a schematic longitudinal cross-sectional view obtained by cutting an example configuration aspect of the inner enclosure body constituting the partition member, in the thickness direction.
[FIG. 5A] A diagram showing a schematic plan view of an example configuration aspect of the inner enclosure body constituting the partition member, as viewed in plan view from the thickness direction.
[FIG. 5B] A cross-sectional view of the inner enclosure body shown in FIG. 5A, taken along line A-A.
[FIG. 5C] A cross-sectional view of the inner enclosure body shown in FIG. 5A, taken along line B-B.
[FIG. 6] A diagram showing a schematic plan view of an example configuration aspect of the inner enclosure body constituting the partition member, as viewed in plan view from the thickness direction.
[FIG. 7] A diagram showing a schematic longitudinal cross-sectional view obtained by cutting an example configuration aspect of the inner enclosure body constituting the partition member, in the thickness direction.
[FIG. 8] A conceptual diagram showing a battery assembly of the present invention.
[FIG. 9] A plan view showing an example of a battery cell.
[FIG. 10] A front view of the battery cell of FIG. 9.
[FIG. 11] A side view of the battery cell of FIG. 9.
[FIG. 12] A conceptual diagram of a thermal insulation properties evaluation test apparatus.

### DESCRIPTION OF EMBODIMENTS

Hereinafter, an example of an embodiment of the present invention will be described in detail. However, the present invention is not limited to the embodiments described below, and can be implemented with any optional modifications without departing from the gist of the present invention.

In the present specification, when the expression "X to Y" (X and Y are any numbers) is described, unless otherwise specified, the description also includes the meaning of "X or more and Y or less" as well as the meaning of "preferably more than X" or "preferably less than Y". Furthermore, when the expression "X or more" (X is any number) is described, unless otherwise specified, the description includes the meaning of "preferably more than X"; and when the expression "Y or less" (Y is any number) is described, unless otherwise specified, the description includes the meaning of "preferably less than Y".

### [Partition member]

The partition member of the present invention is a partition member that has a thickness direction and a plane direction orthogonal to the thickness direction and that partitions battery cells in the thickness direction.

One aspect of the partition member of the present invention includes an outer casing body and an inner enclosure body covered with the outer casing body. It is preferable that the inner enclosure body further includes a retaining part that retains a composition part in contact with at least a portion of an outer peripheral end surface in the plane direction of the composition part. The inner enclosure body does not have to include the retaining part.

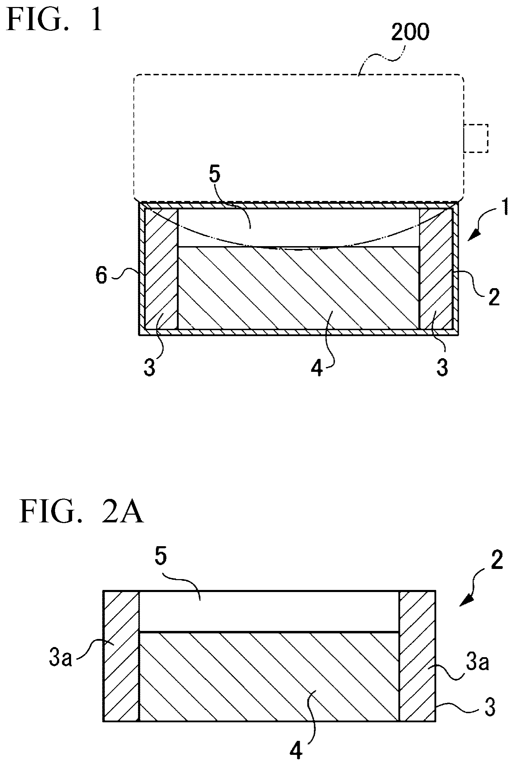

FIG. 1 is a diagram showing a schematic cross-section of an example aspect of the partition member of the present invention.

The partition member 1 shown in the same drawing is a flat plate-shaped member, and is configured to house an inner enclosure body 2 within an outer casing body 6 whose periphery is sealed. The inner enclosure body 2 is configured to house and retain a composition part 4 within a retaining part 3 provided in a frame shape in an outer peripheral part in the plane direction. In the example shown in FIG. 1, the thickness of the retaining part 3 is set to be larger than the thickness of the composition part 4, and the part on the upper side of the composition part 4 surrounded by the retaining part 3 forms a void layer 5.

The partition member 1 is disposed between battery cells 200 by bringing the surfaces of the battery cells 200 into contact with the partition member 1 in a plane direction orthogonal to the thickness direction of the partition member 1.

When the partition member 1 is disposed between the battery cells 200 to assemble the battery assembly, an external pressure is applied to the partition member 1 to restrain the rows of the battery cells 200; however, the retaining part 3 and the void layer 5 mainly undergo compression and deformation to absorb the external pressure. Furthermore, as shown by a dash-dot line in FIG. 1, when the battery cells 200 expand, the composition part 4 is mainly deformed, and thus, the partition member 1 disposed between the battery cells 200 is deformed by following the change in the interval in the thickness direction.

Hereinafter, each member constituting the partition member will be described.

### <Inner enclosure body>

An inner enclosure body includes at least any one of a composition part and a retaining part.

It is preferable that the inner enclosure body does not become suspended even when the inner enclosure body is stored for 24 hours under the conditions of 25°C and then immersed in water. The phrase "not become suspended" means that the composition part does not dissolve or disperse in water due to a physical and/or chemical interaction between the components, and the shape of the composition part is less likely to change.

### (Composition part)

In the partition member according to an embodiment, the composition part functions as a thermal resistance change layer or a phase change layer.

The thermal resistance change layer is a layer which, in a state in which the partition member is disposed between battery cells, functions as a heat transfer material that efficiently transfers the heat generated from an adjacent battery cell to a neighboring battery cell in a normal state and functions as a thermal insulating material that exhibits thermal insulation properties when a battery cell becomes abnormally hot, to control the transfer of heat to an adjacent battery cell.

The phase change layer is a layer that undergoes a phase change accompanied by an endothermic reaction during temperature rise or pressure reduction. When the battery cell goes from a normal state to an abnormal state, a sudden temperature rise can be reduced as a phase change occurs along with an endothermic reaction, due to a temperature rise around the partition member.

### (Thermal resistance changing layer)

The composition part may be a thermal resistance changing layer. A thermal resistance changing material is a material in which the thermal resistance after heating increases with respect to the thermal resistance before heating.

When the temperature of the thermal resistance changing material is raised to 100°C at a rate of 1.7°C/min, it is preferable that the thermal resistance after heating increases to be 1.5 times or more, and more preferably increases to be 1.7 times or more, with respect to the thermal resistance before heating.

The thermal resistance changing material has a low thermal resistance and can efficiently transfer heat generated from an adjacent battery cell to a neighboring battery cell in a normal state, and has a high thermal resistance and can suppress the transfer of heat to an adjacent battery cell in an abnormal state.

For the thermal resistance changing material, one kind of material whose thermal resistance changes can be used. For example, a material in which a change in volume caused by a temperature rise increases thermal resistance, such as a foaming material, can be used. Furthermore, a material in which a phase change caused by a temperature rise changes the thermal resistance can also be used.

As an aspect different from the above-described aspect, there is an aspect in which two or more kinds of materials having different thermal resistances are used as the thermal resistance changing material. It may be designed such that a specific material has a dominant thermal resistance at a specific timing. For example, it can be designed such that a high thermal conductivity material and a low thermal conductivity material are used, and the low thermal conductivity material is coated by or impregnated with the high thermal conductivity material. When the high thermal conductivity material melts, evaporates, or sublimes at a specific temperature, the thermal conductivity of the low thermal conductivity material becomes dominant. In this case, the thermal resistance of the partition member is decreased at a specific temperature. By using such a mechanism, the temperature at which the thermal resistance of the partition member increases, and the thermal resistances before and after the change can be controlled.

In the above-described aspect, it is preferable that the low thermal conductivity material includes at least one of inorganic particles and inorganic fibers, which will be described later, and the high thermal conductivity material includes a liquid or a gel, which will be described later.

### (Phase change layer)

The composition part may be a phase change layer. A phase change material is a material that undergoes a phase change accompanied by an endothermic reaction during temperature rise.

The phase change material may be a material that undergoes an irreversible phase change at a specified temperature, or may be a material that undergoes a reversible phase change at a specified temperature.

It is preferable that the phase change material undergoes a phase change accompanied by an endothermic reaction at a specified temperature. It is because, when the temperature of the surroundings increases from a normal state to an abnormal state, a sudden temperature increase can be reduced by undergoing a phase change accompanied by an endothermic reaction.

As the phase change material, for example, a known phase change material such as an endothermic polymer can be used.

Regarding an aspect different from the above-described aspect, there is an aspect in which two or more kinds of materials having different phase transition temperatures are combined with the phase change material. It may be designed such that a specific material undergoes an endothermic reaction at a specific timing. For example, a high temperature phase transition material and a low temperature phase transition material can be used, and it can be designed such that the low temperature phase transition material is coated by or impregnated with the high temperature phase transition material. When the low temperature phase transition material melts, evaporates, or sublimes at a specific temperature, an endothermic reaction accompanying the phase transition of the material can be utilized. In this case, a sudden temperature increase in a specific temperature region in the partition member is reduced. By using such a mechanism, the partition member can control the temperature at which a sudden temperature increase is reduced.

Regarding the aspect, it is preferable that the high temperature phase transition material includes at least one of inorganic particles and inorganic fibers, which will be described later, and the low temperature phase transition material includes a liquid or a gel, which will be described later.

### (Inorganic particles and inorganic fibers)

The inorganic particles are not particularly limited as long as the effects of the present invention are exhibited, and examples include silica, alumina, calcium silicate, zeolite, diatomaceous earth, Shirasu balloons, clay minerals, vermiculite, mica, cement, perlite, fumed silica, and aerogel. Among these, silica particles, alumina particles, calcium silicate, zeolite, and vermiculite are preferred, and from the viewpoint that it is easy to incorporate a larger amount of a liquid into the particles and between the particles, calcium silicate and zeolite are more preferred, while calcium silicate is even more preferred.

Among the types of calcium silicate, zonotlite, tobermorite, wollastonite, and gyrolite are preferred, and gyrolite is more preferred. The gyrolite having a petal-like structure maintains a porous structure even when compressed and deformed, and therefore has excellent water retention properties. The clay minerals are mainly magnesium silicate (including talc and sepiolite), montmorillonite, and kaolinite. The particle size of the inorganic particles is preferably a particle size equivalent to 1/5 or less of the thickness of the composition part. These inorganic particles can be used singly or in a state as a mixture of a plurality of kinds thereof.

The inorganic fibers are not particularly limited as long as the effects of the present invention are exhibited, and examples include glass fiber, alumina fiber, and rock wool. The fiber diameter of the inorganic fibers preferably has a fiber diameter equivalent to 1/5 or less of the thickness of the composition part. These inorganic fibers can be used singly or in a state as a mixture of a plurality of kinds thereof.

### (Liquid)

The boiling point of the liquid is preferably 50°C to 200°C, and more preferably 80°C to 180°C.

It is preferable that the liquid includes, for example, at least one selected from the group consisting of water, alcohols, esters, ethers, ketones, hydrocarbons, fluorinebased compounds, and silicone-based oils. These can be used singly or as a mixture of two or more kinds thereof. The liquid may contain additives such as a substance imparting antifreeze properties (an antifreeze agent), a preservative, and a pH adjuster. By imparting antifreeze properties, damage to the outer casing body due to expansion caused by freezing may be avoided. Furthermore, by adding a pH adjuster, the pH of the liquid is changed by components and the like eluted from powdered inorganic substances, and the possibility that the powdered inorganic substances, the outer casing body, and the liquid (water) may deteriorate in quality can be reduced. The additives to be contained in water are not limited to these, and can be added as necessary.

It is more preferable that the composition part further contains excess water in addition to the water of hydration of the hydration product that will be described later.

### (Binder)

From the viewpoint of improving the shape retention properties of the composition part, it is preferable that the composition part further contains a binder. The binder is not particularly limited as long as binder cures the composition part, and known materials can be used. From the viewpoint of using the liquid in combination, it is preferable that the binder includes a material that is cured by a hydration reaction.

The material that is cured by a hydration reaction is not particularly limited, and examples include gypsum and a hydraulic material.

Examples of gypsum include natural gypsums such as gypsum dihydrate and gypsum hemihydrate, and chemical gypsums such as phosphoric gypsum, flue gas desulfurization gypsum, titanium gypsum, smelted gypsum, or hydrofluoric gypsum. Among these, natural gypsums are preferred, and calcium sulfate is more preferred.

Examples of the hydraulic material include Portland cement, mixed cement, alumina cement, quicklime, slaked lime, or mixtures thereof. Among them, alumina cement is preferred.

From the viewpoint of controlling the curing time, two or more kinds of materials that are cured by a hydration reaction may be mixed, and it is preferable to mix gypsum and a hydraulic material.

In a certain aspect, it is preferable that the composition is a composition which becomes a solid when dried for 24 hours under the conditions of 25°C. The term "solid" in the present specification means a state in which the viscosity at 25°C measured with a Brookfield viscometer is 200 Pa·s or more.

In the related art, when battery cells are abnormally heated in a state where the battery cells are partitioned by a partition member, the composition part may be fluidized by receiving the generated heat, and the outer casing body may rupture and pop out to the outside. When the composition part pops out from the outer casing body, the thermal insulation performance of the partition member is impaired. In this regard, in the partition member according to an embodiment, since the binder is blended into the composition part, the shape stability is excellent even at a high temperature. Therefore, even when the battery cells are abnormally heated, it is difficult for the composition part to be fluidized, and stable thermal insulation performance can be maintained in a high temperature state.

### (Hydration product)

It is preferable that the composition part contains a hydration product. That is, it is preferable that the composition part is a composition part that uses a material which is cured by a hydration reaction as a binder and that contains a hydration product obtained by curing the material.

As the composition part contains a hydration product, the energy required for vaporization of the water of hydration can be utilized, and therefore, the time taken from when the water contained in the inner enclosure body reaches its boiling point until when the water is completely volatilized, a so-called plateau time, is increased, and it is easy to suppress the thermal propagation properties when the battery cells become abnormally hot.

The contained amount of the binder in the composition is preferably 1% to 70% by mass, and more preferably 20% to 50% by mass, with respect to the total mass (100% by mass) of the composition.

When gypsum and a hydraulic material are used in combination as the binder, it is preferable that a mixture thereof contains 15% to 40% by mass of gypsum and 5% to 30% by mass of the hydraulic material with respect to the total mass (100% by mass) of the mixture.

It is preferable that the composition part further contains a liquid other than the water of hydration of the hydration product. When the composition part contains an excess liquid other than the water of hydration, the plateau time is further increased, and therefore, the effect of suppressing the thermal propagation properties when the battery cells become abnormally hot is further enhanced.

The composition according to one aspect of the composition part contains a paste containing at least one of inorganic particles and inorganic fibers and an excess liquid, and a binder.

The contained amount of at least one of the inorganic particles and the inorganic fibers is preferably 1% to 50% by mass, more preferably 1% to 30% by mass, and even more preferably 1% to 10% by mass, with respect to 100% by mass of the paste.

The contained amount of the liquid is preferably 1% to 70% by mass, more preferably 1% to 50% by mass, and even more preferably 1% to 30% by mass, with respect to 100% by mass of the paste. The ratio of the contained amount of at least one of the inorganic particles and the inorganic fibers with respect to the contained amount of the binder is preferably 1 to 10, preferably 1 to 7, and even more preferably 1 to 5.

The thickness of the composition part is not particularly limited, but is preferably the thickness of the retaining part that will be described later or smaller, and more preferably smaller than the thickness of the retaining part. By making the thickness of the composition part smaller than the thickness of the retaining part, one side or both sides in the thickness direction of the composition part retained by the retaining part become void layers. Due to the presence of this void layer, the composition part retained by the retaining part is less likely to collapse, and the shape retention properties are ensured.

The viscosity at 25°C of the composition before curing used in the composition part as measured with a Brookfield viscometer, is preferably 10 to 200 Pa·s, and more preferably 15 to 100 Pa·s. When the viscosity of the composition is the lower limit value or higher, the shape retention properties are excellent. When the viscosity of the composition is the upper limit value or lower, handleability is excellent.

The viscosity at 25°C of the composition after curing used in the composition part, or of the composition part containing no binder, as measured with a Brookfield viscometer, is preferably 200 Pa·s or higher, and more preferably 500 Pa·s or higher.

When the viscosity of the composition is the lower limit value or higher, the shape retention properties are excellent.

### (Retaining part)

The retaining part constituting the inner enclosure body is a part that houses and retains the composition part therein in a confined manner. Furthermore, when a battery assembly is assembled by sandwiching the partition member between the battery cells, the partition member is sandwiched between a battery cell and a battery cell by applying pressure thereto, and the entire length of the battery assembly is adjusted by restraining the periphery of the battery cells and the partition member in a state of being stacked side by side in a housing, with a belt-shaped member. The retaining part is also a part that provides a function of buffering a pressing force applied to the surface of the battery cells when the partition member is sandwiched between the battery cells in this assembling step. It is preferable that the retaining part has a property of being compressed and deformed by receiving an external force.

Regarding one aspect of the retaining part, an aspect in which the retaining part contains a thermoplastic resin may be mentioned. Examples of the thermoplastic resin include an olefin-based resin such as polyethylene or polypropylene; a polyester resin such as polyethylene terephthalate (PET) or polyethylene naphthalate (PEN), and polystyrene (PS). Furthermore, silicone rubber and a foamed body thereof can also be used.

Among these, from the viewpoint of general-purpose properties, cost, and the like, an olefin-based resin is preferred, and polypropylene is particularly preferred. Furthermore, these resins may contain a heat-resistant filler such as alumina particles or glass fibers.

The retaining part is in contact with at least a portion of the composition part. The retaining part may be disposed to be in contact with the outer peripheral end surface in the plane direction of the composition part to cover a portion or a plurality of regions of the outer peripheral end surface in the plane direction of the composition part, or to cover the entire outer peripheral end surface. The retaining part may be disposed to be partially or entirely in contact with one surface in the thickness direction of the composition part.

For example, the retaining part may be provided on either one side part or both side parts of the composition part, may be provided on the entire circumference of the side parts of the composition part, or may be partially provided on a portion of the periphery of the composition part. In these cases, the retaining part may be configured such that the area of the composition part that is in contact with the retaining part is larger than the area of the composition part that is not in contact with the retaining part.

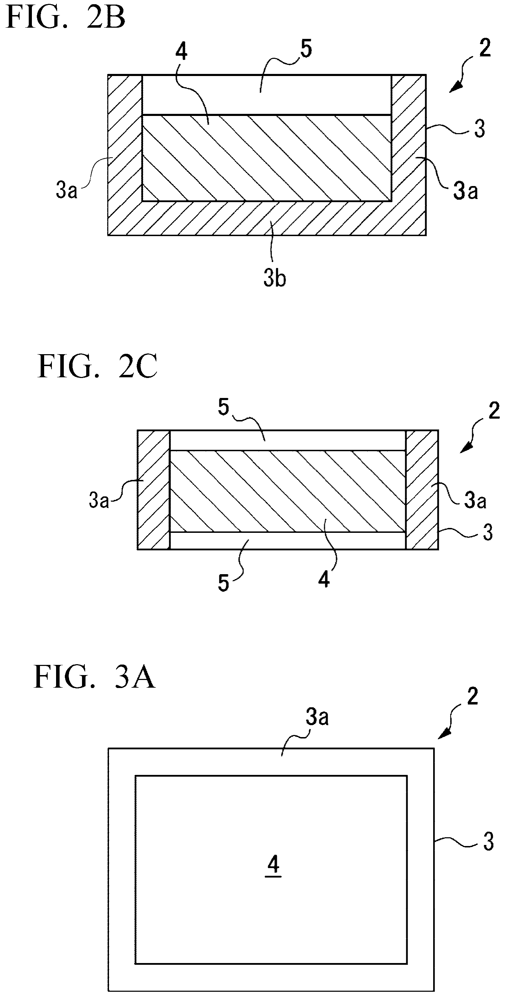

In the partition member 1, as shown in FIG. 2A and FIG. 3A, the retaining part 3 includes a frame-shaped outer wall part 3a that is in contact with the entire outer peripheral end surface in the plane direction of the composition part 4 and extends in the thickness direction, and has a space having a depth in the thickness direction on the inner side of the outer wall part 3a. The outer wall part 3a of this example is provided in a substantially rectangular shape to surround the periphery in the plane direction of the composition part 4; however, the present invention is not limited thereto.

The length in the thickness direction of the retaining part 3 having a space with a depth in the thickness direction, that is, the length (t3) in the thickness direction of the outer wall part 3a that is in contact with the outer peripheral end surface of the composition part 4 is not particularly limited; however, the length (t3) is preferably the thickness (t4) of the composition part 4 or greater, and more preferably has a size greater than the length (t4) in the thickness direction of the composition part 4.

In the example shown in FIG. 1 and FIG. 2A, the length (t3) in the thickness direction of the retaining part 3 is greater than the length (t4) in the thickness direction of the composition part 4, and in a state in which the composition part 4 is housed and retained in the retaining part 3, both ends in the thickness direction of the outer wall part 3a of the retaining part 3 are in contact with the outer casing body 6, while a void layer 5 having its periphery surrounded by the retaining part 3 is secured on the top face part side of the composition part 4.

The void layer 5 provides a function of buffering and absorbing a pressing force applied through the surface of battery cells 200 when assembling a battery assembly by disposing the partition member 1 between the battery cells 200, and a pressing force applied directly from the surface of the battery cells 200 when the battery cells 200 expand. Due to the presence of the void layer 5, it is difficult for the composition part 4 housed within the retaining part 3 to collapse, and the shape retention properties are ensured. Furthermore, the presence of the void layer 5 makes it possible to isolate the contribution of the compression of the retaining part and the composition part against an external pressure.

An inner enclosure body in which the length in the thickness direction of the retaining part is greater than the length in the thickness direction of the composition part as described above, is incorporated with a composition part that controls heat transfer and a retaining part that controls compressibility, and thereby, the effects of having excellent shape stability even at a high temperature, being less likely to rupture, and stably exhibiting excellent thermal insulation properties when the battery cells become hot, are enhanced.

In an inner enclosure body in which the length in the thickness direction of the retaining part is greater than the length in the thickness direction of the composition part, only the retaining part is compressed up to a certain external pressure, and at a certain external pressure or higher, the retaining part and the composition part are compressed together. By isolating the contribution of compression against the external pressure, a partition member having desired compression characteristics can be designed.

### <Outer casing body>

The outer casing body has a peripheral edge part to be sealed, and houses the inner enclosure body in an internal space formed by sealing. The outer casing body is flexible and can be deformed according to the expansion of the battery cells. Furthermore, the outer casing body can return to the original state when the battery cells contract. Specifically, the outer casing body is compressed to absorb expansion when the battery cells expand as the battery cells are charged in a state in which the partition member is disposed between the battery cells, and returns to the original state when the battery cells are discharged and contract.

The outer casing body can be formed using a resin sheet, a resin film, or the like. For example, the composition part and the retaining part can be housed by being sandwiched between two sheets or a two-folded resin sheet or resin film, or by thermally bonding or adhering the peripheral edge part of the outer casing body in which two sheets of resin sheets or resin films are in contact with each other, the composition part and the retaining part can be housed inside the space in a sealed manner.

Furthermore, as the outer casing body, for example, one made of a resin or a metal can be used. A material obtained by laminating a metal foil and a resin is preferred because the material has high heat resistance and high strength. As a laminated body of a metal foil and a resin, a laminated body of three or more layers including a resin layer, a metal foil layer, and a resin sealant layer is preferred.

It is preferable that the metal constituting the metal foil is at least any one of aluminum, copper, tin, nickel, stainless steel, lead, a tin-lead alloy, bronze, silver, iridium, and phosphor bronze. Specifically, the metal foil is an aluminum foil, a copper foil, a tin foil, a nickel foil, a stainless steel foil, a lead foil, a tin-lead alloy foil, a bronze foil, a silver foil, an iridium foil, a phosphor bronze foil, or the like. In particular, the metal foil is preferably an aluminum foil, a copper foil, or a nickel foil, and more preferably an aluminum foil.

As the resin, at least one of a thermosetting resin and a thermoplastic resin can be used; however, a thermoplastic resin is particularly preferred. Examples of the resin include polyethylene, polypropylene, polystyrene, nylon, acrylic, an epoxy resin, polyurethane, polyether ether ketone, polyethylene terephthalate, polyphenyl sulfide, polycarbonate, and aramid. In particular, at least one selected from polypropylene, nylon, and polyethylene terephthalate is preferred.

The thickness of the outer casing body is not particularly limited, but is, for example, 5 to 200 µm. When a laminate (laminated body) is used, the thickness of the metal foil can be 3 to 50 µm, and the thickness of the resin layer can be 2 to 150 µm. In this way, the heat resistance and low water vapor permeability of the metal foil can be exhibited, and at the same time, the sealing properties can be improved by the resin.

As described above, the outer casing body can be provided such that the composition part and the retaining part are sealed (encapsulated) within the outer casing body by joining the peripheral edge parts of two sheets of the outer casing bodies in an annular shape by thermal bonding, adhesion, or the like. Alternatively, the outer casing body can be provided such that one sheet of the outer casing body is folded, and the peripheral edge part is joined by thermal bonding, adhesion, or the like to encapsulate the composition part and the retaining part therein.

### <Deformation characteristics>

Battery cells are subjected to a pressure that restrains the battery assembly during manufacturing. Furthermore, pressure is also applied due to the expansion of electrodes during charging and the generation of gas originating from the liquid electrolyte during charging and discharging. One aspect of the present invention is a partition member having specific deformation characteristics capable of withstanding these external pressures.

Here, the term "deformation ratio" means a ratio of the thickness when an external pressure is applied in the thickness direction at a predetermined pressure, with respect to the thickness when the external pressure is 0 MPa.

In a certain aspect, when an external pressure of 0.2 MPa is applied to the partition member in the thickness direction, a deformation ratio in the same direction with respect to the shape before the external pressure is applied is 6.0% or more, preferably 6.0% to 60%, and more preferably 10% to 60%.

In a certain aspect, when an external pressure of 1.0 MPa is applied to the partition member in the thickness direction, a deformation ratio in the same direction with respect to the shape before the external pressure is applied is 12% or more, preferably 12% to 90%, more preferably 12% to 85%, and even more preferably 15% to 75%.

In a certain aspect, the deformation ratio (X) in the thickness direction of the partition member when an external pressure of 0.2 MPa is applied in the same direction is 6.0% to 60%, and the deformation ratio (Y) when an external pressure of 1 MPa is applied in the same direction is 12% to 90%.

In a certain aspect, the difference (X - Y) between the deformation ratio (X) in the thickness direction of the partition member when an external pressure of 0.2 MPa is applied in the same direction and the deformation ratio (Y) in the same direction when an external pressure of 1 MPa is applied in the same direction is 3.0% to 60%, preferably 20% to 55%, and more preferably 35% to 50%.

Furthermore, in a certain aspect, the ratio (Y/X) of the deformation ratio (Y) in the thickness direction of the partition member when an external pressure of 1 MPa is applied in the same direction with respect to the deformation ratio (X) in the same direction when an external pressure of 0.2 MPa is applied in the same direction, is 0.10 to 2.0, preferably 0.10 to 0.50, and more preferably 0.10 to 0.25.

It is preferable that the partition member does not rupture even when the partition member is pressurized at 1.0 MPa in the thickness direction, and the inner enclosure body remains housed in the outer casing body. Furthermore, it is preferable that the partition member does not rupture even when the temperature is raised to 100°C at 1.7°C/min, and the inner enclosure body remains housed in the outer casing body.

The thermal conductivity in the thickness direction of the partition member when the surface average temperature is 45°C is preferably 0.20 [W/(m·K)] or greater, and more preferably 0.25 to 5.0 [W/(m·K)]. When the thermal conductivity is the lower limit value or greater, the partition member is likely to exhibit a function as a heat transfer material that efficiently transfers the heat generated by a battery cell in a normal state to adjacent battery cells between which the partition member is sandwiched.

Furthermore, it is preferable that the thermal conductivity is measured under the conditions in which the composition part is in contact with the outer casing body.

The thermal conductivity at 45°C of the partition member is measured by heating a thermal conductivity resistance sheet for which the thermal conductivity has been evaluated in advance, to 45°C and measuring the thermal conductivity of the partition member at the same time. When the temperature difference between the front and the back of the thermal conductivity resistance sheet is denoted as Δt1, and the temperature difference between the front and the back of the partition member is denoted as Δt2, the thermal conductivity of the partition member is calculated using the relational expression of "Δt1 × thermal conductivity of thermal conductivity resistance sheet/Δt2". The difference in thickness between the partition member and the thermal conductivity resistance sheet is appropriately converted.

It is preferable that the thermal conductivity of the partition member when the surface average temperature is 200°C is decreased to 90% or less, more preferably decreased to 80% or less, even more preferably decreased to 70% or less, particularly preferably decreased to 60% or less, and most preferably decreased to 50% or less, with respect to the thermal conductivity of the partition member when the surface average temperature is 25°C. As a result, when the battery cells become abnormally hot, the function as a thermal insulating material that exhibits thermal insulation properties to control the transfer of heat to the adjacent battery cell, is likely to be exhibited.

The thermal conductivity of the partition member is decreased as the water of hydration and other liquids contained in the composition part vaporize.

### <Modified Examples>

The partition member according to the embodiment is not limited to the above-mentioned partition member 1. For example, as shown in FIG. 2B, the retaining part 3 may include a frame-shaped outer wall part 3a that is in contact with the entire outer peripheral end surface in the plane direction of the composition part 4 and surrounds the composition part 4, and a bottom part 3b that closes one opening of the frame-shaped outer wall part 3a.

In the inner enclosure body 2 of the example shown in FIG. 2B, a bottomed cylindrical retaining part 3 with an open top part has a recessed part on the inside, and the composition part 4 is housed and retained in the recessed part. In this case as well, the length in the thickness direction of the outer wall part 3a may be set to be greater than the length in the thickness direction of the composition part 4, and a void layer 5 having its periphery surrounded by the retaining part 3 may be secured on the upper side of the composition part 4 in a state in which the composition part 4 is housed and retained in the retaining part 3.

In addition, as shown in FIG. 2C, the inner enclosure body 2 may include a retaining part 3 composed only of a frame-shaped outer wall part 3a that is in contact with the entire outer peripheral end surface in the plane direction of the composition part 4, and a void layer 5 may be provided to be secured on both sides in the thickness direction of the composition part 4 on the inner side of the outer wall part 3a.

In a certain aspect, it is preferable that the retaining part is configured such that the area of contact between the outer casing body and the inner enclosure body increases along with an increase in the external pressure applied to the partition member. The inner enclosure bodies 2 having the void layer 5 as shown in FIG. 1 and FIG. 2A to FIG. 2C are examples thereof.

The ratio of the contact area between the outer casing body and the inner enclosure body when the external pressure is 0.2 MPa with respect to the contact area between the outer casing body and the inner enclosure body when the external pressure is 0 MPa, is preferably 1.0 to 200, more preferably 2.0 to 150, and even more preferably 2.5 to 100.

In the void layers 5 as shown in FIG. 1 and FIG. 2A to FIG. 2C, a member having compressibility, which buffers and absorbs an external pressure applied to the inner enclosure body 2, may be housed.

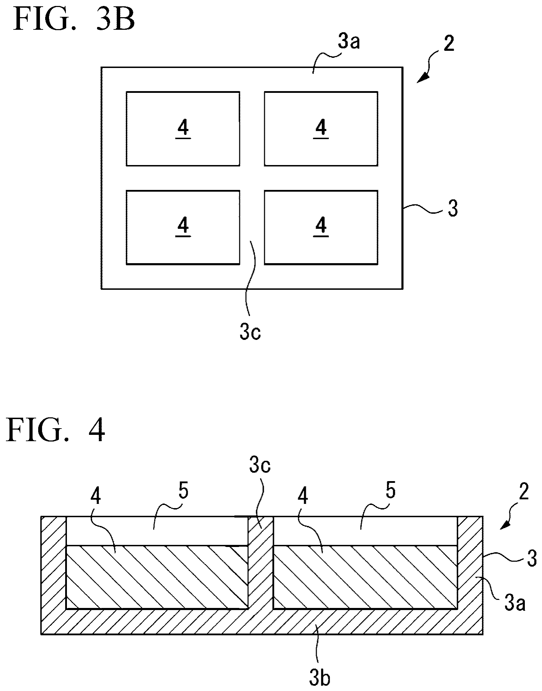

In a certain aspect, it is preferable that the retaining part is disposed in a lattice shape. Here, the term "lattice shape" includes a shape in which, when the inner enclosure body 2 is viewed from the thickness direction, as shown in FIG. 3A, a single composition part 4 is surrounded by a retaining part 3 having a substantially rectangular frame shape, and a shape in which, as shown in FIG. 3B, a plurality of composition parts 4 are surrounded by a retaining part 3 partitioned into a plurality of substantially rectangular shapes in the vertical and horizontal directions.

The inner enclosure body 2 of the example shown in FIG. 3B includes a retaining part 3 including a frame-shaped outer wall part 3a and a lattice-shaped partition wall 3c that partitions an inner space of the outer wall part 3a into a plurality of first spaces, and each of the first spaces houses and retains the composition part 4.

In a certain aspect, the ratio of the area of the retaining part to the total area of the composition part and the retaining part as viewed in plan view from the thickness direction is preferably 0.01 to 0.50, more preferably 0.01 to 0.30, and even more preferably 0.10 to 0.30.

### (Retaining part having tray shape)

The retaining part of a suitable example is a member having a tray shape (hereinafter, also referred to as a "tray-shaped member"), which has one or a plurality of recessed parts. That is, it is preferable that the retaining part has a recessed part as a space having a depth in the thickness direction. A retaining part 3 such as shown in FIG. 2B, which includes a frame-shaped outer wall part 3a and a bottom part 3b that closes one opening of the frame-shaped outer wall part 3a, is an example thereof.

As the tray-shaped member, as shown in FIG. 4, a retaining part 3 can also be mentioned as an example, which includes a frame-shaped outer wall part 3a, a bottom part 3b that closes one opening of the frame-shaped outer wall part 3a, and a lattice-shaped partition wall 3c that partitions the inner space of the outer wall part 3a into a plurality of first spaces (recessed parts). In this example, the composition part 4 is retained in each of the recessed parts; however, a void layer 5 may be secured on the opening side of the composition part 4 in each of the recessed parts.

By providing the retaining part in a tray shape having a recessed part, processing of housing and retaining the above-described composition part within the recessed part can be easily carried out. Furthermore, the function of controlling the compression characteristics in the partition member that houses the composition part having heat resistance, can be improved by using the tray-shaped member, which is preferable.

As described above, the tray-shaped member has a function of housing and filling the composition part that controls heat transfer, within the recessed part and retaining the composition part, and also has a function as a layer that controls the compression characteristics.

In the present invention, even in an aspect in which the composition part is filled in the tray-shaped member, the tray-shaped member is defined as a layer that controls the compression characteristics, and the composition part filled in the recessed part is defined as a layer that controls the thermal conduction due to heat generation by the battery cells. Furthermore, it is not essential that the composition part is retained in all the recessed parts provided in the tray-shaped member.

The size of the recessed part of the tray-shaped member is not particularly limited as long as the effects of the present invention are exhibited. The ratio of the area of the recessed part to the total area of the tray-shaped member when the tray-shaped member is viewed in plan view from the thickness direction, is preferably 1% to 99%, more preferably 3% to 95%, and even more preferably 5% to 90%. When the ratio of the area of the recessed part is the lower limit value or greater, a sufficient amount of the composition part can be retained in the recessed part, and therefore, the control of heat transfer and the thermal insulation effect are maintained. On the other hand, when the ratio of the area of the recessed part is the upper limit value or less, sufficient strength of the tray-shaped member is ensured, and favorable compressibility is obtained. Furthermore, when the ratio of the area of the recessed part is the upper limit value or less, when an external pressure is applied to the partition member, the internal pressure of the partition member is less likely to increase, and the pressure resistance of the partition member is improved.

The area of the recessed part means the opening area of the recessed part. Furthermore, when the tray-shaped member has a plurality of recessed parts, the ratio of the area of the recessed parts means the ratio of the total area of the plurality of recessed parts to the total area of the tray-shaped member.

The depth of the recessed part is not particularly limited, but is preferably 0.1 to 20 mm, more preferably 0.5 to 10 mm, and even more preferably 0.8 to 7 mm. When the depth of the recessed part is the lower limit value or greater, a sufficient amount of the composition part can be retained in the recessed part, and therefore, the control of heat transfer and the thermal insulation effect are maintained. On the other hand, when the depth of the recessed part is the upper limit value or less, sufficient strength of the tray-shaped member is ensured, favorable compressibility is obtained, and at the same time, the battery assembly can be made compact. Furthermore, when the depth of the recessed part is the upper limit value or less, expansion of the battery cells can be absorbed to a greater extent.

The shape of the recessed part is also not particularly limited, and may be an oblong shape as shown in FIG. 3A and FIG. 3B, may be a rectangular shape such as a square shape or a rhombic shape, or may be a circular shape, an elliptical shape, a honeycomb shape, or the like. Furthermore, when there are a plurality of recessed parts, the shapes of all of the plurality of recessed parts may be the same shape or may be a combination of different shapes.

The thickness (sheet thickness) of the tray-shaped member is preferably 50 to 1000 µm, and more preferably 100 to 500 µm. When the thickness of the tray-shaped member is the lower limit value or greater, sufficient compressibility is obtained. On the other hand, when the depth of the recessed part is the upper limit value or less, the thickness of the partition member can be reduced, the proportion occupied by the battery cells increases, and the energy efficiency can be improved. Furthermore, this also leads to making the battery assembly more compact.

The thickness of the tray-shaped member means the largest thickness of the tray-shaped member. When the tray-shaped member is the retaining part 3 shown in FIG. 2B and FIG. 4, the thickness of the tray-shaped member corresponds to the length in the thickness direction of the outer wall part 3a.

The recessed part may have through-holes in the member thickness direction. As through-holes are provided, a larger number of composition parts can be retained, and the control of heat transfer and the thermal insulation effect are further improved. The proportion of the area occupied by the through-holes with respect to the area of the recessed part when the tray-shaped member is viewed from the thickness direction is preferably about 10% to 100%,and more preferably 50% to 90%. When the proportion of the area occupied by the through-holes is the lower limit or greater, higher control of heat transfer and higher thermal insulation effect are obtained. When the proportion of the area occupied by the through-holes is the upper limit or less, the retention properties of the composition part within the tray-shaped member are improved.

When a space having a depth in the thickness direction in the retaining part is partitioned in a lattice shape, and a plurality of first spaces are formed, a second space that partially connects neighboring first spaces may be formed, and the composition part retained in each of the first spaces may be partially connected to each other. More specifically, when a tray-shaped member having a plurality of recessed parts (first spaces) is used, low position parts that are partially low may be provided in the partition between the recessed parts, and the space above the low position part may be used as a second space for partially connecting the composition parts to each other.

By partially connecting the composition parts retained in the neighboring first spaces to each other in the second space, the shape retention properties of the composition part are improved. When the battery cells become abnormally hot, the tray-shaped member may be melted by the heat thereof and may lose its shape; however, when the composition parts retained in the recessed parts (first space) are connected to each other in the second space, the shape of the composition part is likely to be retained even when the tray-shaped member is melted, and the thermal insulation performance is sustained for a longer period of time.

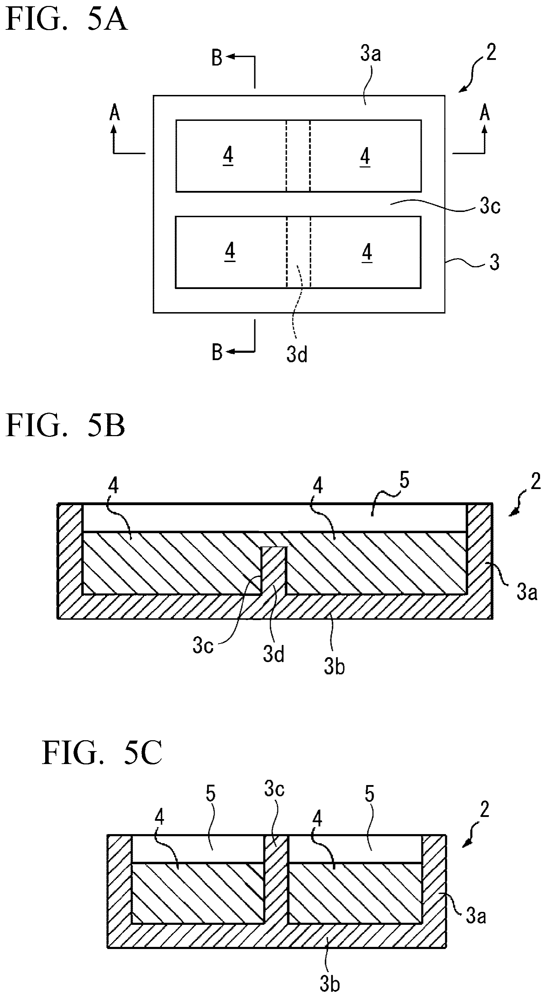

For example, as shown in FIG. 5A to FIG. 5C, the retaining part (tray-shaped member) 3 may include a frame-shaped outer wall part 3a that surrounds the composition part 4, a bottom part 3b that closes one opening of the frame-shaped outer wall part 3a, and a lattice-shaped partition wall 3c that partitions the inner space of the frame-shaped outer wall part 3a into a plurality of recessed parts (first space), and the partition wall 3c may have a low position part 3d that is partially low. In the inner enclosure body 2 including this retaining part 3, as shown in FIG. 5B, the space above the low position part 3d of the partition wall 3c in the inner space of the outer wall part 3a of the retaining part 3 is the second space. The composition parts 2 retained in the recessed parts are partially connected to each other above the low position part 3d. In the above-described aspect, since the composition parts are connected above the low position part of the partition wall, the low position part of the partition wall does not appear on the surface of the composition part when viewed in plan view from the thickness direction.

On the other hand, a cavity may be formed in the partition wall, and the composition parts may be connected to each other through the cavity. In the above-described aspect, since the partition wall is present further above the connected part of the composition, the partition wall appears on the surface of the composition part when viewed in plan view from the thickness direction.

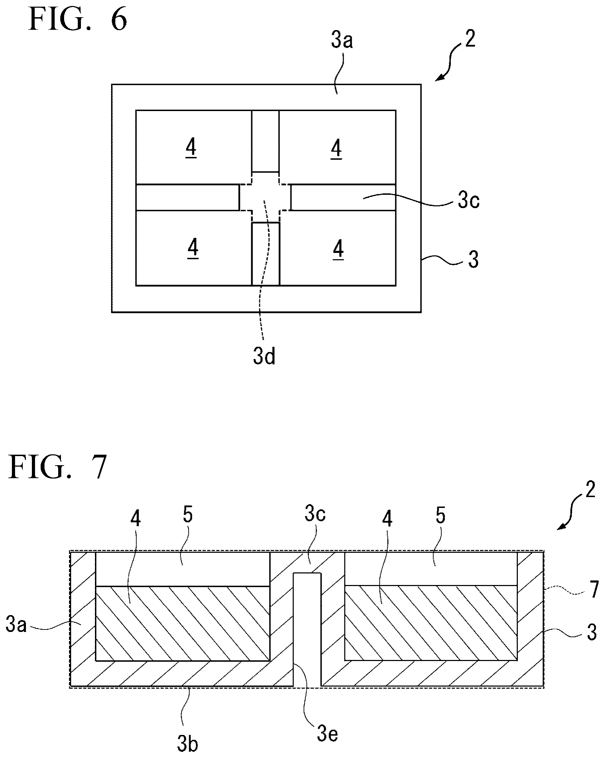

The retaining part having the recessed part including the first space and the second space is not limited to the forms shown in FIG. 5A to FIG. 5C. For example, as shown in FIG. 6, as viewed in plan view from the thickness direction, the retaining part may have a form in which a cruciform part including lattice points in the lattice-shaped partition wall 3c serves as a low position part 3d, and each of the composition parts 4 retained in four recessed parts around the low position part 3d are connected to each other above the low position part 3d.

When the tray-shaped member is viewed in plan view from the thickness direction, the ratio of the area of the composition part to the total area of the tray-shaped member and the composition part is preferably 50% to 100% by volume, more preferably 55% to 95% by volume, even more preferably 60% to 90% by volume, and particularly preferably 65% to 90% by volume. When the ratio of the area of the composition part is the lower limit value or greater, a gap is likely to be secured within the inner enclosure body even in a state in which the composition part is compressed due to expansion of the battery cells, and an excess liquid discharged as a result of compression of the composition part is likely to escape to the gap, making the partition member more difficult to rupture. When the ratio of the area of the composition part is the upper limit value or less, both high rupture pressure and compressibility can be achieved.

In a tray-shaped member having a substantially rectangular shape when viewed in plan view from the thickness direction, XYZ coordinate axes are defined in which the thickness direction is the Z-axis direction, a direction parallel to one side of the outer circumferential edge of the tray-shaped member in the plane direction is the X-axis direction, and a direction orthogonal to the X-axis direction in the plane direction is the Y-axis direction.

In this case, in a cross-section obtained by cutting the tray-shaped member in the XZ plane to pass through the composition part, the ratio of the area occupied by the space with respect to an area of a smallest rectangle surrounding the tray-shaped member is preferably 15% or less, more preferably 12% or less, even more preferably 10% or less, particularly preferably 7% or less, and most preferably 5% or less. When the third space is provided in the tray-shaped member, the lower limit of the ratio of the area occupied by the space with respect to an area of a smallest rectangle surrounding the tray-shaped member is preferably 0.1% or more, preferably 0.5% or more, and preferably 1% or more.

Furthermore, in a cross-section obtained by cutting the tray-shaped member in the YZ plane to pass through the composition part, the ratio of the area occupied by the space with respect to an area of a smallest rectangle surrounding the tray-shaped member is preferably 15% or less, more preferably 12% or less, even more preferably 10% or less, particularly preferably 7% or less, and most preferably 5% or less. When the third space is provided in the tray-shaped member, the lower limit of the ratio of the area occupied by the space with respect to an area of a smallest rectangle surrounding the tray-shaped member is preferably 0.1% or more, preferably 0.5% or more, and preferably 1% or more.

When the ratio of the area occupied by the space in the cross-sections of the XZ plane and the YZ plane is the lower limit value or greater, a gap is likely to be secured in the inner enclosure body even in a state in which the composition part is compressed due to expansion of the battery cells, and an excess liquid discharged as a result of compression of the composition part is likely to escape to the gap, making the partition member more difficult to rupture. When the ratio of the area occupied by the space in the cross-sections of the XZ plane and the YZ plane is the upper limit value or less, it is easier to achieve both the difficulty of rupture and the characteristics imparted to the composition part.

The "space in the cross-sections of the XZ plane and the YZ plane" means a space in which neither the tray-shaped member nor the composition part is present, and may include a void layer that may be formed above the composition part in the recessed part of the tray-shaped member, or for example, when recessed lines are formed in parts corresponding to the recessed parts on the bottom side of the tray-shaped member, the space within the recessed lines.

As the tray-shaped member having recessed lines on the bottom side, for example, the retaining part 3 shown in FIG. 7 can be mentioned as an example. In the retaining part 3 of this example, the partition wall 3c is composed of two side walls that rise from the bottom part 3b between the two recessed parts, and a connecting part that connects the top part of those side walls, and a recessed line 3e with the bottom part 3b side open is formed between those side walls. On the back side of the retaining part 3, a third space is provided within the recessed line 3e between the neighboring first spaces. In this example, the "space in the cross-sections of the XZ plane and the YZ plane" includes the void layer 5 above the composition part 4, and the third space in the recessed line 3e. That is, in the cross-sections of the XZ plane and the YZ plane, the ratio of the area occupied by the void layer 5 and the space within the recessed line 3e with respect to the area of the smallest rectangle 7 surrounding the retaining part (tray-shaped member) 3 can be controlled to be within the above-described range.

When the retaining part is a tray-shaped member having a third space on the back side, assuming a smallest rectangular parallelepiped capable of storing the retaining part, the ratio of the volume of the third space to the volume (100% by volume) of the rectangular parallelepiped is preferably 0.1% to 15% by volume, more preferably 0.1% to 12% by volume, even more preferably 0.1% to 10% by volume, particularly preferably 0.1% to 7% by volume, and most preferably 0.1% to 5% by volume. When the ratio of the volume of the third space is the lower limit value or greater, the composition part is likely to retain the shape even when the tray-shaped member melts, and the thermal insulation performance can be sustained for a longer period of time. When the ratio of the volume of the third space is the upper limit value or less, a sufficient amount of the composition part may be easily retained, and the control of heat transfer and the thermal insulation effect are likely to be sufficiently exhibited.

A manufacturing method of the retaining part having a tray shape is not particularly limited; however, for example, a method of manufacturing the retaining part by producing a resin sheet of polypropylene or the like and performing vacuum molding or press molding, and injection molding of creating a mold for the tray-shaped member and pouring a molten resin, are suitably used.

### [Battery assembly]

A battery assembly of the present invention includes the partition member of the present invention and a plurality of battery cells.

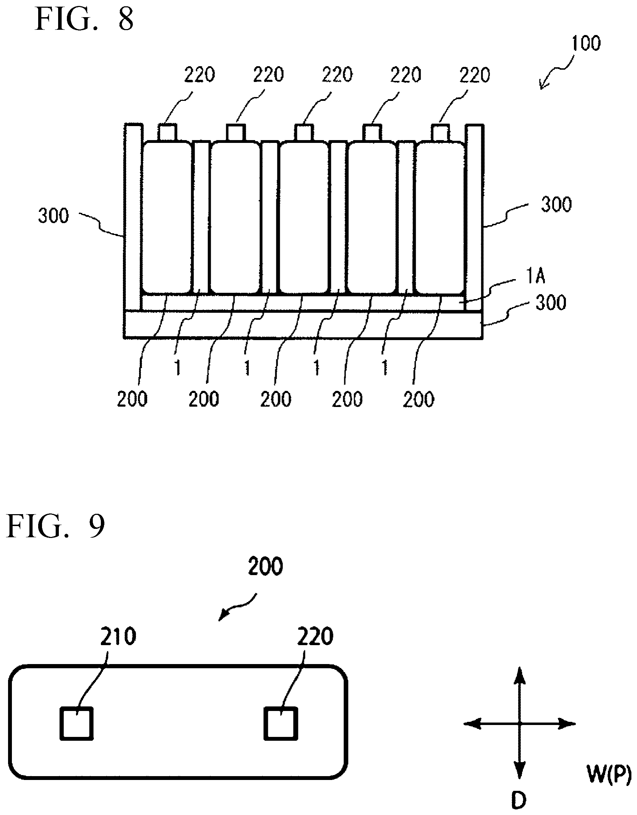

As an example, as shown in FIG. 8, a plurality of battery cells 200 and a partition member 1 that partitions the battery cells 200 are stacked and housed in, for example, a housing 300. The partition member 1 is provided between at least the battery cells 200 constituting the battery assembly 100 so that the battery cells 200 do not come into contact with each other. The partition member of the present invention can also be used as a partition member (1A) for partitioning between the battery cells 200 and a member other than the battery cells, in addition to being disposed between the battery cells 200. Here, the "member other than the battery cells" means, for example, a housing that has a bottom face and four side faces and houses the battery cells and the partition member constituting the battery assembly, and in FIG. 8, it is the bottom part of the housing.

The orientation of the partition member 1 in the battery assembly during use is not particularly limited, and the thickness direction of the partition member 1 may be parallel to a horizontal plane or may intersect the horizontal plane.

As described above, the partition member 1 includes: an inner enclosure body including a composition part and a retaining part that is used as necessary; and an outer casing body that houses the inner enclosure body.

The compressive deformation rate in the thickness direction of the partition member is preferably in the range of 0.1 to 20 MPa. By setting the compressive deformation rate to 0.1 MPa or more, it is possible to apply an appropriate stress to the battery cells and reliably fix the battery cells. From the above viewpoint, the compressive deformation rate is more preferably 0.2 MPa or more, and even more preferably 0.5 MPa or more. On the other hand, from the viewpoint that the stress in the swelling during charging and discharging as well as in the expansion during deterioration over time can be absorbed, and therefore, the life of the cells can be extended, the upper limit is preferably 20 MPa or less, more preferably 15 MPa or less, and even more preferably 10 MPa or less.

For the compressive deformation rate (23°C), a value measured in accordance with JIS K7181 is generally used; however, in the present invention, the compressive deformation rate (23°C) is a value that is evaluated by simply measuring the pressure and the thickness of the partition member when pressure is applied such that the thickness of the partition member is about 95% to 50% of the thickness when no pressure is applied, and performing calculation from the ratio of the thickness under pressure to the thickness when no pressure is applied.

The partition member can be used as it is in order to partition between the battery cells or between the battery cells and other members; however, in order to facilitate fixing when partitioning between the battery cells or between the battery cells and the other members, an adhesive or a double-sided tape may be attached to the surface of the partition member, or a resin piece or the like may be attached to the surface of the partition member.

### [Battery cell]

It is preferable that the battery cell is, for example, a lithium ion secondary battery including a positive electrode and a negative electrode which are capable of intercalating and deintercalating lithium ions, and an electrolyte. Furthermore, in addition to the lithium ion secondary battery, secondary batteries such as a lithium ion all-solid-state battery, a nickel-hydrogen battery, a nickel-cadmium battery, and a lead storage battery can be applied.

Furthermore, as the type of the battery cell, a rectangular battery cell, a pouch type battery cell, a cylindrical battery cell, and the like can be applied regardless of the type of the battery.

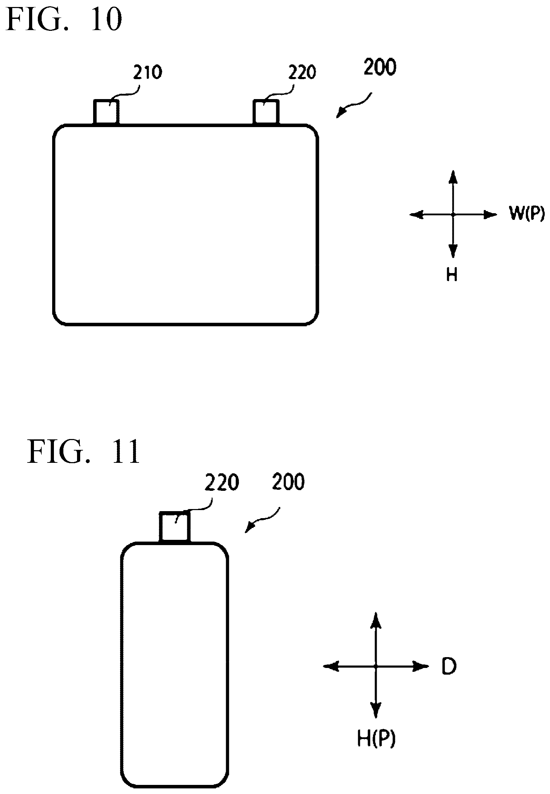

FIG. 9 is a plan view showing an example of a battery cell 200 constituting a battery assembly, FIG. 10 is a front view of the battery cell 200 shown in FIG. 9, and FIG. 11 is a right side view of the battery cell 200. The battery cell 200 is formed in a rectangular parallelepiped shape having a height direction (H), a width direction (W), and a thickness direction (D), and a terminal 210 and a terminal 220 are provided on a top face thereof.

The battery assembly according to the present embodiment such as described above is applied to battery packs installed in, for example, an Electric Vehicle (EV), a Hybrid Electric Vehicle (HEV), a Plug-in Hybrid Electric Vehicle (PHEV), an electric heavy industrial machine, an electric motorcycle, an electrically assisted bicycle, a ship, an aircraft, a train, an Uninterruptible Power Supply (UPS), a home storage system, and a power system stabilization storage battery system utilizing renewable energy such as wind power, solar power, tidal power, and geothermal power. However, the battery assembly can also be used as a power source that supplies electric power to a device other than the above-described EV and the like.

It is preferable that a unit structure composed of two battery cells and the partition member disposed between the two battery cells in a battery assembly satisfies the following condition (i).
(i) The thermal conductivity of a partition member in contact with two battery cells when the surface average temperature of the partition member is 200°C is reduced to 70% or less with respect to the thermal conductivity of the partition member when the surface average temperature of the partition member is 25°C.

When the unit structure of the battery assembly satisfies the condition (i), an effect is sufficiently exhibited, in which when a battery cell becomes abnormally hot, the partition member functions as a thermal insulating material that exhibits thermal insulation properties, thereby controlling the transfer of heat to the adjacent battery cell, while functioning as a heat transfer material that efficiently transfers heat generated from a battery cell to the adjacent battery cell in a normal state.

It is more preferable that the thermal conductivity of the partition member when the above-described surface average temperature is 200°C is reduced to 60% or less, and even more preferably reduced to 50% or less, with respect to the thermal conductivity when the surface average temperature is 25°C.

It is preferable that the unit structure composed of two battery cells and a partition member disposed between those two battery cells satisfies the following condition (ii).
(ii) The deformation ratio of the partition member disposed between two battery cells against a pressure of 0.2 MPa applied between the battery cells is 6.0% or more.

As the above-described unit structure of the battery assembly satisfies the condition (ii), even when an external pressure is applied to the partition member due to the expansion of the battery cells, the expansion of electrodes during charging, and the generation of gas originating from the liquid electrolyte during charging and discharging, since the partition member can be deformed and absorb the external pressure, the partition member tends to be far less likely to rupture.

The deformation ratio of the condition (ii) is more preferably 6.0% to 60%, and even more preferably 10% to 60%.

### Examples

The present invention will be specifically described below by way of Examples; however, the present invention is not limited by the following description.

### [Experimental Example 1]

As a retaining part 3 of an inner enclosure body 2 constituting a partition member 1, a bottomed tray-shaped member having a plurality of recessed parts as shown in FIG. 3B and FIG. 4 was produced by a vacuum forming method, using a polypropylene sheet having a thickness of 0.3 mm.

The tray-shaped member had a length of 60 mm and a width of 120 mm, the shape of the lowest part of the recessed parts of the tray-shaped member was a square with a size of 7.79 mm × 7.79 mm, and the depth was 1.5 mm.

0.09 g of sodium carboxymethyl cellulose was added to 9 g of water, and the mixture was kneaded for 30 minutes at room temperature using a mixer. 0.9 g of calcium silicate was added thereto, the mixture was kneaded with a stirring bar at room temperature for 5 minutes, and a slurry was obtained. 3.4 g of calcium sulfate and 1.7 g of alumina cement were added to the slurry as binders to obtain a calcium silicate paste (composition).

Next, as shown in FIG. 4, each of the recessed parts of the tray-shaped member was filled with the calcium silicate paste, which was then cured by a hydration reaction, and a composition part 4 was formed to construct an inner enclosure body 2.

The depth of the recessed parts of the tray-shaped member and the height of the composition part 4 to be filled were set to a height of 1.0 mm from the bottom of the recessed parts having a depth of 1.5 mm, and a void layer 5 having a height of 0.5 mm was formed above the composition part 4.

In a state in which the composition part 4 had been formed in the recessed parts, the area ratio of the retaining part to the total area of each of the composition part 4 and the retaining part (tray-shaped member) 3 when the partition member 1 was viewed in plan view from the thickness direction, was 39%.

An aluminum laminate film including polyethylene terephthalate (outer side) having a thickness of 0.012 mm, nylon (inner side) having a thickness of 0.015 mm, and polypropylene (innermost side) having a thickness of 0.06 mm as resin layers was prepared as an outer casing body 6.

The inner enclosure body 2 in which the composition part 4 was formed in the recessed parts of the tray-shaped member, was disposed inside the outer casing body 6 and encapsulated using a vacuum degassing sealer to obtain a partition member 1.

### [Experimental Example 2]

A partition member 1 was obtained in the same manner as in Experimental Example **1,** except that the depth of the recessed parts of the tray-shaped member as the retaining part in Experimental Example 1 was set to 1.3 mm, the composition part 4 was formed to a height of 1.0 mm from the bottom of the recessed part, and a void layer 5 having a height of 0.3 mm was formed above the composition part 4.

### [Experimental Example 3]

A partition member 1 was obtained in the same manner as in Experimental Example 1, except that the depth of the recessed parts of the tray-shaped member as the retaining part in Experimental Example 1 was set to 2.0 mm, the composition part 4 was formed to a height of 2.0 mm from the bottom of the recessed parts, and a void layer 5 was not formed above the composition part 4.

### [Experimental Example 4]

A partition member 1 was obtained in the same manner as in Experimental Example 1, except that a composition prepared without using the binder in Experimental Example 1 was used.

### [Experimental Example 5]

A partition member 1 was obtained in the same manner as in Experimental Example 1, except that the composition was filled in the outer casing body without using a tray in Experimental Example 1.

### [Experimental Example 6]

A partition member was obtained in the same manner as in Experimental Example 1, except that the depth of the recessed parts of the tray-shaped member as the retaining part in Experimental Example 1, was set to 2.0 mm, and the composition prepared without using the binder was filled to a height of 2.0 mm from the bottom of the recessed parts to form the composition part 4.

### [Experimental Example 7]

A partition member was obtained in the same manner as in Experimental Example 5, except that the composition prepared without using the binder in Experimental Example 5 was used.

### [Evaluation 1]

While applying a pressure of 2.5 MPa in the thickness direction of the partition member produced in each of the Experimental Examples, one surface was heated to 100°C at a temperature increase rate of 1.7°C/min, and it was checked by visual inspection to see whether an outflow of a liquid material from the inside of the partition member to the outside during the heating was observed, or whether an outflow of solids other than a very small amount of powder was observed.

A case in which the outflow of a liquid material or a powder was not observed was rated as "1 (no breakage)", and a case in which the outflow of a liquid material or a powder was observed was rated as "2 (breakage occurred)".

### [Evaluation 2]

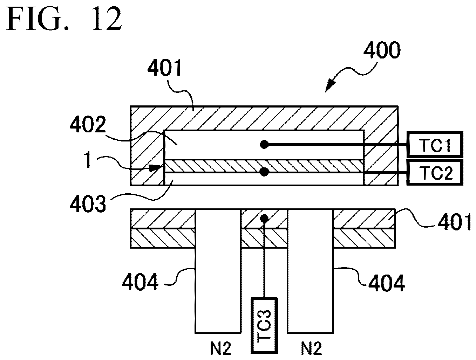

The partition member produced in each of the Experimental Examples was used to evaluate the thermal insulation properties using a test device as shown in FIG. 12.

Specifically, the partition member 1 was placed on a brass metal plate 403 having a thickness of 1 mm, and a brass metal block 402 having a thickness of 5 mm was set on the top part of the partition member 1. The metal plate 403, the partition member 1, and the metal block 402 were covered, except for the lower part of the metal plate 403, with a thermal insulating material 401.

Nitrogen gas at 300°C heated by two tube heaters 404 was blown onto the metal plate 403 from below, and the temperature of the metal block 402 located in the top part the partition member 1 was measured. A time during which the temperature of the metal block 402 measured in this heating test was maintained in the range of 100°C ± 5°C was measured as a plateau time.

### [Evaluation 3]

For the partition member produced in each of the Experimental Examples, the thickness in a state in which no external pressure was applied was measured, and then the thickness when an external pressure of 0.2 MPa was applied in the thickness direction was measured. From the measured values of those thicknesses, a deformation ratio in the thickness direction of the partition member when the partition member was pressurized at 0.2 MPa in the thickness direction was calculated.

### [Evaluation 4]

For the partition member produced in each of the Experimental Examples, it was checked by visual inspection to see whether an outflow of a liquid material from the inside of the partition member to the outside in a state in which an external pressure of 1.0 MPa was applied in the thickness direction for one minute was observed, or whether an outflow of solids other than a very small amount of powder was observed.

A case in which the outflow of a liquid material or a powder was not observed was rated as "1 (no breakage)", and a case in which the outflow of a liquid material or a powder was observed was rated as "2 (breakage occurred)".

The results of Evaluations 1, 2, and 4 for each Experimental Example are shown in Table 1, and the results of Evaluation 3 are shown in Table 2.

**[Table 1]**

| | Experimental Example 1 | Experimental Example 2 | Experimental Example 3 | Experimental Example 5 | Experimental Example 6 | Experimental Example 7 |
|---|---|---|---|---|---|---|
| Height of composition part [mm] | 1.0 | 1.0 | - | - | 2.0 | - |
| Depth of recessed part [mm] | 1.0 | 1.0 | - | - | 2.0 | - |
| Presence or absence of void layer | Present | Present | Absent | Absent | Absent | Absent |
| Depth of void layer [mm] | 0.5 | 0.3 | - | - | 0 | - |
| Presence or absence of binder | Present | Present | Present | Present | Absent | Absent |
| Presence or absence of tray-shaped member | Present | Present | Present | Absent | Present | Absent |
| Evaluation 1: Test for rupture by heating | 1 | 1 | 1 | 1 | 2 | 2 |
| Evaluation 2: Plateau time [sec] | 412 | 403 | 398 | 277 | 214 | 18 |
| Evaluation 4: Test for rupture by compression | 1 | 1 | 1 | 1 | 2 | 1 |

**[Table 2]**

| | Experimental Example 1 | Experimental Example 2 | Experimental Example 3 | Experimental Example 4 | Experimental Example 5 | Experimental Example 6 | Experimental Example 7 |
|---|---|---|---|---|---|---|---|
| Height of composition part [mm] | 1.0 | 1.0 | - | 2.0 | - | 2.0 | - |
| Depth of recessed part [mm] | 1.0 | 1.0 | - | 1.5 | - | 2.0 | - |
| Presence or absence of void layer | Present | Present | Absent | Present | Absent | Absent | Absent |
| Depth of void layer [mm] | 0.5 | 0.3 | - | 0.5 | - | 0 | - |
| Presence or absence of binder | Present | Present | Present | Absent | Present | Absent | Absent |
| Presence or absence of tray-shaped member | Present | Present | Present | Present | Absent | Present | Absent |
| Evaluation 3: Deformation ratio upon pressurization at 0.2 MPa [%] | 29.9 | 18.7 | 10.3 | 42.3 | 19.1 | 5.9 | 3.3 |

From the results of Evaluation 1, it was found that the partition members of Experimental Examples 1 to 3 and 5, in which the composition part was formed using a composition containing a binder, had excellent shape retention properties at high temperatures. On the other hand, the partition members of Experimental Examples 6 and 7, in which no binder was used in the composition part, had inferior shape retention properties at high temperatures.

Furthermore, it was found from the results of Evaluation 2 that the partition members of Experimental Examples 1 to 3 and 5, in which the composition part was formed using a composition containing a binder, had a longer plateau region during a temperature rise process, as compared with the partition members of Experimental Examples 6 and 7, in which no binder was used. As a long plateau region is maintained, it takes a longer time for the internal moisture to evaporate, which means that it takes a longer time for heat transfer when an abnormality occurs in the battery cells.

From the results of Evaluation 3 and Evaluation 4, it was found that the partition members of Experimental Examples 1 to 3 and 5, in which the composition part was formed using a composition containing a binder, had a large deformation ratio when compressed at 0.2 MPa, did not rupture even when compressed at 1.0 MPa, and had excellent shape retention properties when compressed.

Furthermore, in the partition member of Experimental Example 4, in which the thickness of the retaining part was larger than the thickness of the composition part, and a void layer was formed so that the composition part was separated from the outer casing body, the deformation ratio upon pressurization at 0.2 MPa could be further increased.

### INDUSTRIAL APPLICABILITY

In a normal state, the partition member of the present invention can efficiently transfer heat generated from an adjacent battery cell to a neighboring battery cell. Furthermore, in an abnormal state in which there is a risk that damage to an adjacent battery cell may spread in a chain reaction to the entire battery assembly, the chain of damage between battery cells can be prevented.

Therefore, a battery assembly which uses the partition member of the present invention is promising as a secondary battery that is highly safe even when having a high energy density, for example, as a power source for a vehicle.

### REFERENCE SIGNS LIST

1 Partition member
2 Inner enclosure body
3 Retaining part (tray-shaped member)
4 Composition part (heat transfer control layer)
5 Void layer
6 Outer casing body
7 Smallest rectangle surrounding tray-shaped member
100 Battery assembly
200 Battery cell
210 Terminal
220 Terminal
300 Housing
400 Thermal insulation properties evaluation tester
401 Thermal insulating material
402 Metal block
403 Metal plate
404 Tube heater
D Thickness direction

## Claims

1. A partition member that has a thickness direction and a plane direction orthogonal to the thickness direction and that partitions battery cells in the thickness direction, the partition member comprising:
an outer casing body; and
an inner enclosure body covered with the outer casing body,
wherein the inner enclosure body includes a composition part composed of a composition containing at least one of inorganic particles and inorganic fibers, and a binder.

2. The partition member according to Claim 1,
wherein the composition part further contains a liquid.

3. The partition member according to Claim 1 or 2,
wherein the inner enclosure body further includes a retaining part, and
the retaining part includes an outer wall part that is in contact with at least a portion of an outer peripheral end surface in the plane direction of the composition part and extends in the thickness direction.

4. The partition member according to Claim 3,
wherein both ends of the retaining part in the thickness direction of the outer wall part are in contact with the outer casing body.

5. The partition member according to Claim 1 or 2,
wherein a deformation ratio in the thickness direction of the partition member when the partition member is pressurized at 0.2 MPa in the thickness direction is 6.0% or more.

6. The partition member according to Claim 3,
wherein a length in the thickness direction of the retaining part is larger than a length in the thickness direction of the composition part.

7. The partition member according to Claim 3,
wherein the retaining part has a space having a depth in the thickness direction, and the composition part is retained within the space.

8. The partition member according to Claim 3,
wherein the retaining part has a space having a depth in the thickness direction, the space includes a plurality of first spaces partitioned in a lattice shape, and the composition part is retained in each of the first spaces.

9. The partition member according to Claim 3,
wherein the retaining part has a space having a depth in the thickness direction, the space includes a plurality of first spaces partitioned in a lattice shape, the composition part is retained in each of the first spaces, and a third space is formed between neighboring first spaces on a back side of the retaining part.

10. The partition member according to Claim 9,
wherein a ratio of a volume of the third space with respect to a volume of 100% by volume of a smallest rectangular parallelepiped configured to store the retaining part is 0.1% to 15% by volume.

11. The partition member according to Claim 3,
wherein the retaining part is a tray-shaped member including a frame-shaped outer wall part surrounding the composition part, and a bottom part closing one opening of the frame-shaped outer wall part, and
the composition part is retained in a recessed part on an inner side of the outer wall part.

12. The partition member according to Claim 11,
wherein the tray-shaped member further includes a lattice-shaped partition wall that partitions the inner side of the frame-shaped outer wall part,
a plurality of recessed parts are formed on the inner side of the frame-shaped outer wall part by the partition wall, and
the composition part is retained in each of the recessed parts.

13. The partition member according to Claim 11,
wherein the tray-shaped member further includes a lattice-shaped partition wall that partitions the inner side of the frame-shaped outer wall part,
a plurality of recessed parts are formed on the inner side of the frame-shaped outer wall part by the partition wall,
the partition wall comprises two side walls rising from the bottom part between two recessed parts, and a connecting part that connects top parts of the side walls, a recessed line opening toward a bottom part side is formed between the two side walls,
the composition part is retained in each of the recessed parts, and the composition parts are connected to each other above a low position part.

14. The partition member according to Claim 11,
wherein when the tray-shaped member is viewed in plan view in the thickness direction, a ratio of an area of the composition part with respect to a total area of the tray-shaped member and the composition part is 50% to 100% by volume.

15. The partition member according to Claim 11,
wherein when a shape of the tray-shaped member as viewed in plan view from the thickness direction is a rectangular shape, and
XYZ coordinate axes are defined such that the thickness direction is defined as a Z-axis direction, a direction parallel to one side of an outer circumferential edge of the tray-shaped member in the plane direction is defined as an X-axis direction, and a direction orthogonal to the X-axis direction in the plane direction is defined as a Y-axis direction,
in a cross-section obtained by cutting the tray-shaped member in an XZ plane to pass through the composition part, a ratio of an area occupied by a space with respect to an area of a smallest rectangle surrounding the tray-shaped member is 15% or less, and
in a cross-section obtained by cutting the tray-shaped member in a YZ plane to pass through the composition part, the ratio of the area occupied by the space with respect to the area of the smallest rectangle surrounding the tray-shaped member is 15% or less.

16. A battery assembly comprising:
a plurality of battery cells; and
the partition member according to Claim 1 or 2 disposed between the battery cells.

17. The battery assembly according to Claim 16,
wherein a unit structure comprising two of the battery cells and the partition member disposed between the two battery cells satisfies the following condition (i):
(i) a thermal conductivity of the partition member when a surface average temperature of the partition member in contact with the two battery cells is 200°C is reduced to 70% or less with respect to a thermal conductivity of the partition member when the surface average temperature is 25°C.

18. The battery assembly according to Claim 16, wherein a unit structure comprising two of the battery cells and the partition member disposed between the two battery cells satisfies the following condition (ii):
(ii) a deformation ratio of the partition member disposed between the battery cells against a pressure of 0.2 MPa applied between the two of the battery cells is 6.0% or more.
